# EUROPEAN PATENT SPECIFICATION

(11) **EP 1 494 916 B1**
(45) Date of publication and mention of the grant of the patent: **23.07.2008**
(21) Application number: 03708437.3
(22) Date of filing: 03.03.2003
(51) Int. Cl.: B62K 15/00, B62K 25/16

(54) **FOLDING BICYCLE**
FALTRAD
BICYCLETTE PLIABLE

(30) Priority: 15.04.2002 SI 200200101; 18.12.2002 SI 200200308
(43) Date of publication of application: 12.01.2005
(73) Proprietor: Studio Moderna SA, 6900 Lugano (CH)
(72) Inventor: MIHELIC, Miko, 1356 Dobrova (SI)
(74) Representative: Viering, Jentschura & Partner
(86) International application number: PCT/IB2003/001243
(87) International publication number: WO 2003/086848

(56) References cited:
- WO-A-01/38165
- WO-A-99/38759
- DE-A- 4 313 832
- FR-A- 1 011 990

## Description

### Field Of The Invention

The invention relates to a folding bicycle according to the preamble of claim 1.

The subject of invention is a bicycle, which can without the use of tools or any special knowledge or skill, quickly and easily be folded into such a shape and dimensions that it can be put into the trunk of any average-sized car, and is portable as well, while preserving the riding characteristics of a non-folding bicycle.

### Background of the Invention

A folding bicycle of the initially mentioned typ is known, for example, from DE-A-43 12 832.

The technical problem the invention solves is how to design a folding bicycle, which has in the riding mode the same geometry that defines the riding characteristics and ergonomics in a usual bicycle, and has in the storage or portable mode the dimensions that fit into the trunks of small-sized cars, while allowing folding without the use of tools and in riding mode having no gaps between detachable parts.

Known folding bicycles typically have a two-piece frame, which can be dismantled, folded or telescopically shortened. To reduce the dimensions in the portable mode, both smaller-sized wheels can also be removed. The disadvantage of all the solutions is that the joints between the frame parts gradually develop a certain gap, or the joints themselves are the weak points in the construction that gradually lead to a breakdown. Another disadvantage is that the frames are usually shorter and thus ergononically unsuitable for the rider's size. The result of this is that one cannot comfortably ride such a bicycle on a greater distance, the rider is less energy efficient, and the riding characteristics are less favorable due to the different position of the front wheel and smaller wheel size compared to the non-folding bicycles.

### Summary of the Invention

The technical problem described above is solved by a folding bicycle having the features of claim 1. Further embodiments are described in the dependent claims. A main feature and innovation is in the fact that the shape and size of the frame remains the same as in a usual non-folding or rigid men's or women's bicycle. One innovation is the front fork, which enables turning by 180 degrees and folding of the front wheel towards the down tube, while in the riding mode preserving the same angle as in usual bicycles. The down tube is made of two tubes with a slot in between to slide the front wheel into. The handlebar can also be folded towards the frame. Since the diameter of the wheels are preferably only of the 16" size or 23" diameter, the length of the bicycle folded in such a way enables transportation in the trunk of small-sized car. If the rear wheel is removed, the length of the folded bicycle may be further reduced to the length of the frame, although in one embodiment, the rear wheel is foldable as well.

The chain stays, together with the rear wheel, is foldable upwards toward the seat. To facilitate the folding of the chain stays and the rear wheel, the transmission from the chainring to the sprocket is complemented by two sprockets and a shaft, i.e. consists two chains in series, which results in an additional transmission ratio. The shaft also serves as a pivot, around which the chain stays and the rear wheel fold. The front chain remains between the front chainring and the sprocket on the shaft, while the rear chain remains between the front sprocket and the rear sprocket, and shifts upwards together with the chain stays and the rear wheel without changing the distance between the front sprocket and the rear sprocket. To reduce the width of the folded bicycle, the pedals can also be folded.

Such a bicycle can also be arranged as a tandem, without extending. Due to the normal frame size and the small-sized wheels, the bicycle can be equipped with an electric or internal combustion motor without increasing the folded dimensions. Since the geometry of the bicycle is identical to the geometry of a usual bicycle, the riding characteristics remain the same, so the bicycle is suitable for longer trips as well. Transmission gears, preferably internal, can improve the riding characteristics. The gear unit can be placed in the rear hub, on the middle shaft, or in the bottom bracket.

- The weight of such a bicycle is the same or less than in usual bicycles, so in portable mode it can be carried around, possibly in a specially designed bag or backpack.

The front fork allows installation of shock absorbers, which increase the stability of the bicycle, as well as the comfort of the ride.

### Brief Description of the Figures

Exemplary embodiments of the invention will be explained in detail with reference to the following figures in which like reference numerals refer to like parts throughout:

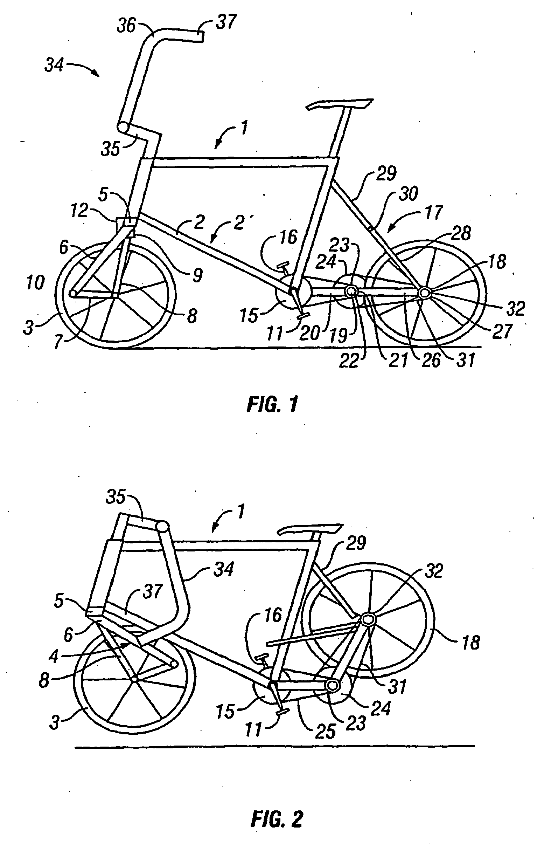

Fig. 1 is a schematic of a first embodiment of a folding bicycle in a riding mode accordance with the present invention;
Fig. 2 is a the schematic of a first embodiment of a folding bicycle in a portable mode in accordance with the present invention;
Fig. 3 illustrates a tandem version of a folding bicycle in accordance with the present invention;
Fig. 4 is a schematic of a second embodiment of the folding bicycle in the riding mode, in accordance with the present invention;
Fig. 5 illustrates a folding bicycle with an auxiliary engine in accordance with the present invention;
Fig. 6 illustrates a women's version of a folding bicycle in accordance with the present invention;

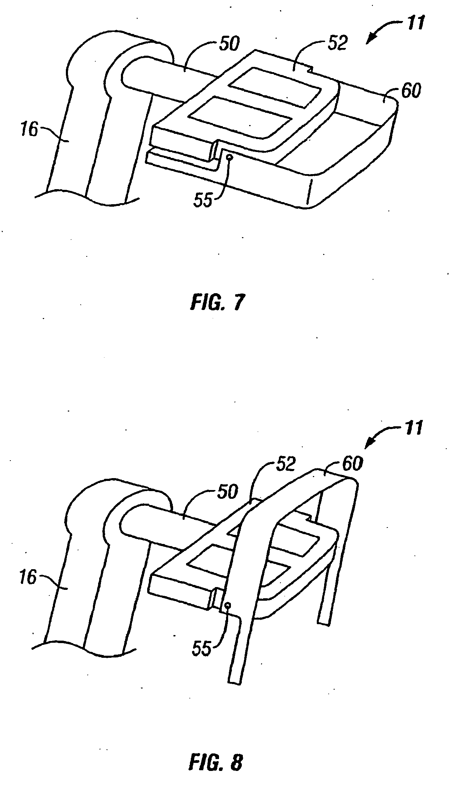

Fig. 7 illustrates a folding pedal of a bicycle in the riding mode in accordance with the present invention; and
Fig. 8 illustrates a folding pedal in a folded position in accordance with the present invention.

### Detailed Description of the Invention

In the following paragraphs, the present invention will be described in detail by way of example with reference to the drawings. Throughout this description, the preferred embodiment and examples shown should be considered as exemplary, rather than as limitations on the present invention. As used herein, the "present invention" refers to any one of the embodiments of the invention described herein, and any equivalents. Furthermore, reference to various feature(s) of the present invention throughout this document does not mean that all claimed embodiments must include the referenced feature(s).

The folding bicycle comprises a frame (1) of any known geometry, designed according to the rider's size and riding preferences. The down tube (2) may include two tubes with a gap between them (2'), which is approximately the same or wider than the width of the front wheel (3). The front fork (4) is attached to the frame (1) at the bearing (5). The fork blades (6) are bent forward and equipped with two backwards-pointing swing-arms (7), which hold the front wheel (3) in such a way that its position remains the same as in a usual bicycle and can be adjusted to riding preferences. The swing-arms (7) are connected by a stirrup (8), which encloses the wheel (3). Its top is pressed against the joint (9) of the front fork (4) directly under the bearing (5). The two parts can merely touch or can be connected by a shock absorber, preferably an elastomer type. The stirrup (8) is connected to the fork (4), preferably in the area of the joint (9), by a manually releasable connection (12), preferably a spring lock.

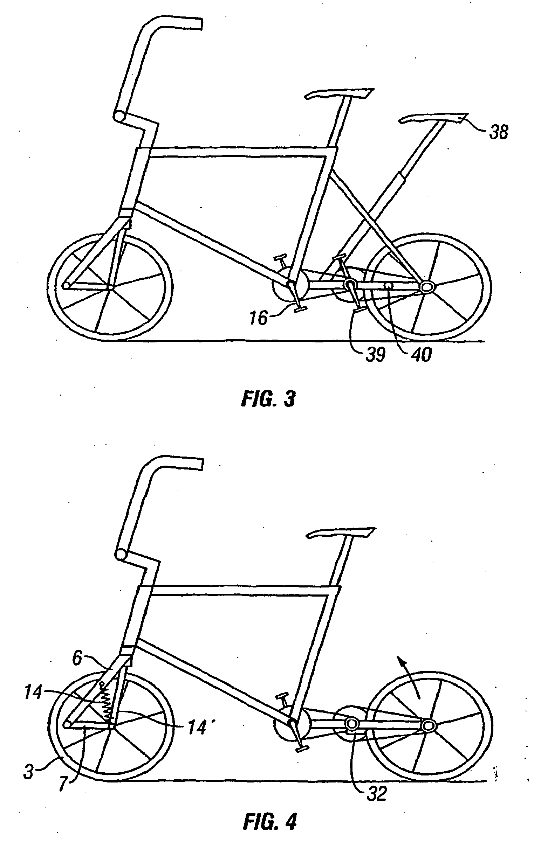

In the other example, as illustrated in the second embodiment of the folding bicycle illustrated in Fig. 4, the swing-arms (7), which are attached to the fork blades (6), rest on the end parts (13) and are bound by the springs (14). In the riding mode, the springs (14) keep the swing-arms (7) constantly pressed against the end parts. The end parts (13) can be replaced by the shock absorbers (14'), such as preferably the elastomer type, or the hydraulic or pneumatic type.

In the first example, when the connection (12) is released and the front wheel (3) on the swing-arms (7) is turned forwards by approximately 180 degrees, or in the second example, when the swing-arms (7) are turned by straining the springs (14), so that the springs (14) hold the front wheel (3) next to the fork blades (6), and when the fork (4) is turned by 180 degrees, the front wheel (3) is fixed in the gap (2') between the two down tubes (2) of the frame (1). Such folding of the front wheel (3) and the fork (4) is possible without the use of any tools in the preferred example. It decreases the dimensions of the bicycle in the portable mode without altering the riding characteristics in the riding mode.

The chainring (15) and the crank (16) are mounted to the frame in any desired fashion and at any desired position. The rear wheel (18) can be folded by turning it together with the chain stays (26) around the pivot (19), which is placed on the frame (1), between the chainring (15) and the rear wheel (18).

From the frame (1), preferably from a point close to the chainring (15), preferably double bracket (20) extends towards the rear wheel (18). At the end of the bracket (20) there is a bearing assembly (21) with a middle shaft (22), which holds two coaxial sprockets (23) and (24). The chainring (15) and the sprocket (23) are connected by the front chain (25). The chain stays (26) are attached to the bearing assembly (21), and have dropouts (27) in which the rear wheel (18) is attached. The seat stays (28), which are connected to the chain stays (26), are releasably connected to the strut (29), protruding from the frame (1). Preferably, they are connected by a quick-release mechanism. Between the strut (29) and the seat stays (28), a shock absorber can be fitted as well.

The rear wheel (18) is mounted in the dropouts (27). By its sprocket (32), the rear chain (31), the sprockets (24) and (23), the front chain (25) and the chainring (15), it is connected to the crank (16). The rear hub can also be equipped with internal gears, which are not shown in the figures. The internal gears can also be placed on the bearing assembly (21), or in the bottom bracket (16). External gears on the rear wheel can also be used, but would be less favorable due to the small size of the wheel and the length of the derailleur, which would be too close to the ground.

When the quick-release mechanism (30) is released, the chain stays (26), the rear wheel (18), and the rear chain (31) are pivoted around the middle shaft (22) towards the frame (1) without changing the distance between the chainring pairs. Therefore, it is not possible for the chains to come off during the folding and unfolding of the bicycle. Such a design also permits the use of two chain covers, which do not hinder the folding of the rear wheel and the chain stays. The chain covers are not shown in the figures.

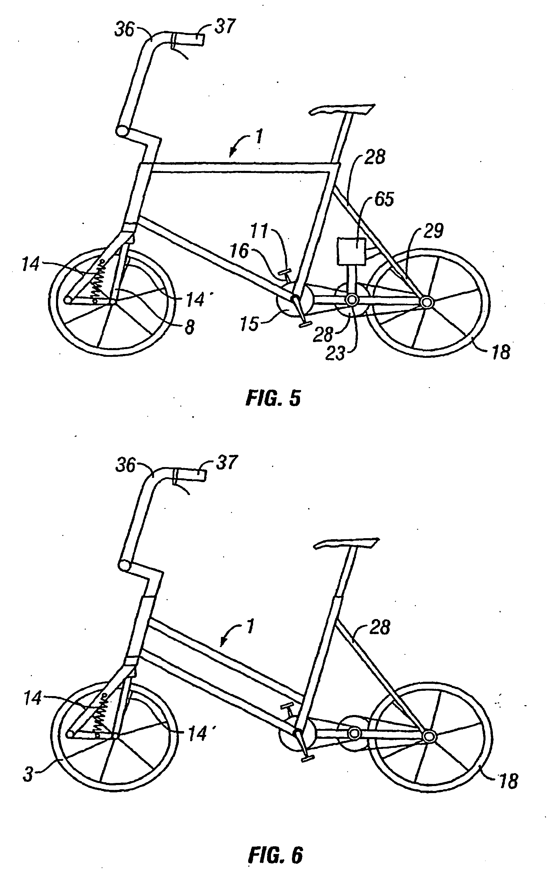

In one embodiment, as illustrated in Fig. 5, a drive mechanism (65) is provided. The drive mechanism can be mounted in any fashion. For example, it is mounted to frame (1) and provides a motive force via connection to one of the sprockets (23, 24 or 32), or chainring (15). Examples of drive mechanisms (65) are an electrical motor or an internal combustion engine.

In an alternative embodiment, as illustrated in Figs. 5 and 6, the rear wheel (18) is removable further reducing the length of the folded bicycle to the length of the frame. In addition, in an alternate embodiment, quick release mechanism (30) is not provided, making strut (29) and seat stays (28) in fixed relation to one another.

In the other example, the chain stays (26) can be folded around the pivot (19) and are equipped with a locking device, preferably a pin. They can also be equipped with a shock absorber and/or spring, which are not displayed in the figures. In this example there are no seat stays.

To reduce the width of the folded bicycle, folding pedals (11) can be used. Any form of pedals (11) can be used and mounted on the crank (16). In one example, each crank (16) has a shorter stub (50) with a bearing and a pedal (11), such as including a narrow pedal portion (52). Each pedal (11) preferably has associated with it a joint assembly (55), which enables folding of the outer footrest (60) portion of the pedal (11), and in the riding mode can provide a larger footrest foot seating surface.

The handlebar (34) is foldable. The middle part (33), which is attached to the bearing (5) in the head tube (35), can be folded backwards and downward, while each side (36) can be folded towards the frame (1), so that the handles (37) are right next to the frame (1).

The middle shaft (22) also allows that the bicycle can be arranged as a two-seat tandem without the extending of the frame. The second seat support (38) can easily be attached, and the middle shaft (22) can be equipped with an additional crank (39). The front and the rear pair of cranks can be aligned equally or with a 90-degree delay to allow both riders to pedal undisturbedly. The direct transmission between the sprockets (23) and (24) enables synchronized rotation of the cranks. It is also possible to mount a pair of footrests (40) to the chain stays (26), instead of the additional crank.

Since the wheels are of smaller size, preferably 16" or alternatively 23" or other sizes, the spokes are less loaded, so the single-person frame could withstand the load of two persons as well

The bicycle also can be equipped with brakes, lights, fenders, a stand etc., as frequently provided in bicycles.

The design of the frame allows variations in shape and dimensions. It canbe designed as a men's, women's, children's bicycle, or any other shape, without changing the essence of the invention, defined in the following patent requirements:

Instead of chains, it is also possible to use drivebelts, preferably geared drivebelts.

## Claims

1. A folding bicycle comprising
(A) a frame (1) which has a top tube, a head tube, a down tube (2), and a seat tube,
(B) a foldable front-wheel assembly which has a front wheel fork (4) rotatably attached to the frame (1), and a front wheel (3) mounted to the front wheel fork (4), and
(C) a rear-wheel assembly which has chainstays (26) and a rear wheel (18) mounted to the chainstays (26),
**characterized in that**
(D) the down tube (2) is made of two tubes having a gap (2') therebetween, wherein
the front-wheel assembly is fordable by rotating the front wheel fork (4) by 180 degrees and folding it toward the down tube (2) to thereby partially insert the front wheel (3) into the said gap (2').

2. The folding bicycle according to claim 1, **characterized in that** the rear-wheel assembly is foldable **in that** the chainstays (26) together with the rear wheel (18) can be folded around a pivot (19).

3. The folding bicycle according to claim 1, **characterized in that** it comprises a handlebar foldable towards the frame.

4. The folding bicycle according to claim 2, **characterized in that** the pivot (19) has a shaft (22) connected to two coaxial sprockets (23, .24), wherein front and rear chains (25, 31) are provided connecting a chain ring (15) provided on the frame (1) and a rear sprocket (32), respectively, with the two coaxial sprockets (23, 24).

5. The folding bicycle according to claim 4, **characterized by** comprising a bracket (20) which extends from the frame (1) towards the rear wheel (18) and which holds the shaft (22).

6. The folding bicycle according to claim 1, **characterized in that** the front wheel fork (4) is equipped with two swing-arms (7) which hold the front wheel (3), and one end part of which is pivotably coupled to the front wheel fork (4) and the other end part of which is coupled to a stirrup (8) which in turn is connected to the front wheel fork (4) and which encloses a portion of the front wheel (3).

7. The folding bicycle according to claim 6, **characterized by** further comprising springs (14) arranged between the swing arms (7) and the front wheel fork (4).

8. The folding bicycle according to claim 6 or 7, **characterized in that** the other end parts of the swing arms (7) comprise shock absorbers (14').

9. The folding bicycle according to claim 8, **characterized in that** the shock absorbers (14') are of the elastomer, the hydraulic or the pneumatic type.

10. The folding bicycle according to claim 1, **characterized in that** the chainstays (26) comprise a lacking device.

11. The folding bicycle according to claim 10, **characterized in that** the locking device comprises a pin.

12. The folding bicycle according to claim 10 or 11, **characterized in that** the chainstays (26) comprise a shock absorber and/or a spring.

13. The folding bicycle according to one of claims 1 to 12,
**characterized by** further comprising an electric motor or an internal combustion motor.

14. The folding bicycle according to one of claims 1 to 13,
**characterized by** further comprising a second seat support (38) attached to the frame (1) and located behind a seat attached to the frame (1).

15. The folding bicycle according to one of claims 1 to 14,
**characterized by** further comprising cranks (16) equipped with folding pedals (11).

16. The folding bicycle according to claim 2, **characterized by** further comprising seatstays (28) which connect the chainstays (26) to the frame (1) and which are releasably connected to a strut (29) extending from the frame (1).

## Patentansprüche

1. Ein Klappfahrrad, aufweisend
(A) einen Rahmen (1) mit einem Oberrohr, einem Steuerrohr, einem Unterrohr (2), und einem Sitzrohr,
(B) eine klappbare Vorderradanordnung mit einer Vorderradgabel (4), die drehbar am Rahmen (1) angebracht ist, und einem Vorderrad(3), das an der Vorderradgabel (4) befestigt ist, und
(C) eine Hinterradanordnung mit Kettenstreben (26) und einem Hinterrad (18), das an den Kettenstreben (26) befestigt ist,
**dadurch gekennzeichnet, dass**
(D) das Unterrohr (2) aus zwei Rohren mit einer Lücke (2') zwischen ihnen besteht, wobei
die Vorderradanordnung durch Drehen der Vorderradgabel (4)um 180 Grad und Klappen in Richtung des Unterrohres (2)eingeklappt werden kann, wobei **dadurch** das Vorderrad (3) teilweise in besagte Lücke (2') eingeschoben wird.

2. Das Klappfahrrad nach Anspruch 1, **dadurch gekennzeichnet, dass** die Hinterradanordnung **dadurch** zusammengeklappt werden kann, dass die Kettenstreben (26) zusammen mit dem Hinterrad (18) um eine Drehachse (19) geklappt werden.

3. Das Klappfahrrad nach Anspruch 1, **dadurch gekennzeichnet, dass** es einen Lenker, der in Richtung des Rahmens geklappt werden kann, besitzt.

4. Das Klappfahrrad nach Anspruch 2, **dadurch gekennzeichnet, dass** die Drehachse (19) einen Schaft (22) besitzt, der mit zwei koaxialen Zahnkränzen (23, 24) verbunden ist, wobei die vorderen und hinteren Ketten (25, 31) einen Kettenring (15), der am Rahmen (1) befestigt ist, beziehungsweise einen hinteren Zahnkranz (32) mit den zwei koaxialen Zahnkränzen (23, 24) verbinden.

5. Das Klappfahrrad nach Anspruch 4, **dadurch gekennzeichnet, dass** es ein Tretlager (20) besitzt, das sich vom Rahmen (1) in Richtung Hinterrad (18) erstreckt und das den Schaft (22) hält.

6. Das Klappfahrrad nach Anspruch 1, **dadurch gekennzeichnet, dass** die Vorderradgabel (4) mit zwei Schwenkarmen (7) ausgestattet ist, die das Vorderrad (3) halten, und das eine Ende der Schwenkarme an die Vorderradgabel (4) angelenkt ist und das andere Ende mit einem Bügel (8) verbunden ist, welcher wiederum mit der Vorderradgabel (4) verbunden ist und welcher einen Teil des Vorderrades (3) einschließt.

7. Das Klappfahrrad nach Anspruch 6, **dadurch gekennzeichnet, dass** es des Weiteren Federn (14) besitzt, die zwischen den Schwenkarmen (7) und der Vorderradgabel (4) angeordnet sind.

8. Das Klappfahrrad nach Anspruch 6 oder 7, **dadurch gekennzeichnet, dass** die anderen Enden der Schwenkarme (7) Stoßdämpfer (14') aufweisen.

9. Das Klappfahrrad nach Anspruch 8, **dadurch gekennzeichnet, dass** die Stoßdämpfer (14') elastomerisch, hydraulisch oder pneumatisch sind.

10. Das Klappfahrrad nach Anspruch 1, **dadurch gekennzeichnet, dass** die Kettenstreben (26) eine Sperrvorrichtung enthalten.

11. Das Klappfahrrad nach Anspruch 10, **dadurch gekennzeichnet, dass** die Sperrvorrichtung einen Stift enthält.

12. Das Klappfahrrad nach Anspruch 10 oder 11, **dadurch gekennzeichnet, dass** die Kettenstreben (26) einen Stoßdämpfer und/oder eine Feder beinhalten.

13. Das Klappfahrrad nach einem der Ansprüche 1 bis 12, **dadurch gekennzeichnet, dass** es des Weiteren einen elektrischen Motor oder einen internen Verbrennungsmotor besitzt.

14. Das Klappfahrrad nach einem der Ansprüche 1 bis 13, **dadurch gekennzeichnet, dass** es des Weiteren einen zweiten Sitzträger (38), der am Rahmen (1) angebracht ist und sich hinter einem Sitz, der am Rahmen (1) befestigt ist, befindet.

15. Das Klappfahrrad nach einem der Ansprüche 1 bis 14, **dadurch gekennzeichnet, dass** es des Weiteren Kurbeln (16) mit klappbaren Pedalen (11) besitzt.

16. Das Klappfahrrad nach Anspruch 2, **dadurch gekennzeichnet, dass** es des Weiteren Sitzstreben (28) aufweist, die die Kettenstreben (26) mit dem Rahmen (1) verbinden und die lösbar mit einer Strebe (29) verbunden sind, die sich vom Rahmen (1) aus erstreckt.

## Revendications

1. Une bicyclette pliable comprenant
(A) un cadre (1) qui a un tube horizontal, un tube de direction, un tube diagonal (2), et un tube de selle,
(B) un assemblage roue avant pliable qui a une fourche avant (4) attachée de façon rotative au cadre (1), et une roue avant (3) montée sur la fourche avant (4), et
(C) un assemblage roue arrière qui a des bases arrière (26) et une roue arrière (18) montée sur les bases arrières (26),
**caractérisée par**
(D) le tube diagonal (2) fait de deux tubes qui ont un espace (2') entre, où
l'assemblage roue avant est plié en faisant faire à la roue avant une rotation de 180 degrés et en la pliant vers le tube diagonal (2) pour ainsi insérer partiellement la roue avant (3) dans ledit espace (2').

2. La bicyclette pliable, selon la revendication 1, **caractérisée par** l'assemblage roue arrière qui est pliable et par les bases arrières (26) et la roue arrière (18) qui peuvent être pliées autour d'un pivot (19).

3. La bicyclette pliable, selon la revendication 1, **caractérisée par** un guidon pliable vers le cadre.

4. La bicyclette pliable, selon la revendication 2, **caractérisée par** le pivot (19) qui a un cardan (22) relié à deux pignons coaxiaux (23, 24), où les chaînes avant et arrière (25,31) sont fournies reliant un plateau (15) présent sur le cadre (1) et un pignon arrière (32), respectivement, avec les deux pignons coaxiaux (23, 24).

5. La bicyclette pliable, selon la revendication 4, **caractérisée par** un palier de pédalier (20) qui s'étend du cadre (1) vers la roue arrière (18) et qui tient le cardan (22).

6. La bicyclette pliable, selon la revendication 1, **caractérisée par** la fourche avant (4) qui est équipée avec deux bras oscillants (7) qui tiennent la roue avant (3), et une partie de laquelle est couplée de façon pivotante à un étrier (8) qui à son tour est relié à la fourche avant (4) et qui enveloppe une portion de la roue avant (3).

7. La bicyclette pliable, selon la revendication 6, **caractérisée par** l'ajout de ressorts (14) installés entre les bras oscillants (7) et la fourche avant (4).

8. La bicyclette pliable, selon les revendications 6 ou 7, **caractérisée par** des amortisseurs (14') à l'autre bout des bras oscillants (7).

9. La bicyclette pliable, selon la revendication 8, **caractérisée par** des amortisseurs (14') qui sont de type élastomère, hydraulique ou pneumatique.

10. La bicyclette pliable, selon la revendication 1, **caractérisée par** les bases arrière (26) qui comprennent un système de fermeture.

11. La bicyclette pliable, selon la revendication 10, **caractérisée par** le système de fermeture qui comprend une clavette.

12. La bicyclette pliable, selon les revendications 10 ou 11, **caractérisée par** les bases arrière (26) qui comprennent un amortisseur et/ou un ressort.

13. La bicyclette pliable, selon une des revendications 1 à 12, **caractérisée par** l'ajout d'un moteur électrique ou d'un moteur à combustion interne.

14. La bicyclette pliable, selon une des revendications 1 à 13, **caractérisée par** l'ajout d'un deuxième support de siège (38) attaché au cadre (1) et situé derrière un siège attaché au cadre (1).

15. La bicyclette pliable, selon une des revendications 1 à 14, **caractérisée par** l'ajout de manivelles (16) équipées de pédales pliantes (11).

16. La bicyclette pliable, selon la revendication 2, **caractérisée par** l'ajout de haubans (28) qui relie les bases arrière (26) au cadre (1) qui est lié et relâché à une entretoise (29) s'étendant du cadre (1).
